# EUROPEAN PATENT APPLICATION

(11) **EP 4 675 843 A1**
(43) Date of publication of application: **07.01.2026**
(21) Application number: 25755177.0
(22) Date of filing: 10.02.2025
(51) Int. Cl.: H01M 50/59, H01M 50/502, H01M 50/249, H01M 50/521, H01M 50/517

(54) **BUSBAR ASSEMBLY AND BATTERY PACK INCLUDING SAME**

(30) Priority: 16.02.2024 KR 20240022667
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2025/099348
(87) International publication number: WO 2025/174180

(57) **Abstract**

BUSBAR ASSEMBLY AND BATTERY PACK INCLUDING THE SAME

A busbar assembly according to certain embodiments of the present disclosure comprises: a busbar; a first insulating part that surrounds a main body of the busbar; and a second insulating part that surrounds both ends of the busbar, wherein the second insulating part comprises: a pair of cap parts that surround the upper and side surfaces of both ends of the busbar, and a connecting part located between the pair of cap parts and integrated with the pair of cap parts, and wherein the connecting part extends along a longitudinal direction of the busbar and is located on an outer surface of the main body of the busbar.

## Description

### [TECHNICAL FIELD]

### Cross-Reference to Related Application(s)

This application claims priority to and the benefit of Korean Patent Application no. KR10-2024-0022667, filed on February 16, 2024, the entire contents of which are incorporated herein by reference.

The present disclosure relates to a busbar assembly and a battery pack including the same, and more particularly, to a busbar assembly capable of preventing an electrical short phenomenon and a heat propagation phenomenon caused thereby between a surrounding metal structure and a busbar under a high temperature environment due to the occurrence of an internal flame, and a battery pack including the same.

### [BACKGROUND ART]

Secondary batteries which are highly applicable to various products and exhibit superior electrical properties such as high energy density are commonly used not only in portable devices but also in electric vehicles or hybrid electric vehicles driven by electrical power sources. Such a secondary battery has the primary advantage of remarkably reducing the use of fossil fuels and does not generate by-products caused by the use of energy, which can enhance environmental friendliness and energy efficiency. For these reasons, the secondary battery is gaining attention as an alternative energy source.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely chargeable/dischargeable, have low self-discharge rates, and have high energy density, as compared to nickel-based batteries.

In general, according to the shapes of exterior cases, lithium secondary batteries may be classified into cylindrical or prismatic secondary batteries fabricated by mounting the electrode assembly in a metal can, and pouch-shaped secondary batteries fabricated by mounting the electrode assembly in a pouch made of an aluminum laminate sheet.

Recently, along with a continuous rise of the necessity for a large-capacity secondary battery structure, including the utilization of the secondary battery as an energy storage source, there is a growing demand for a battery pack of a middle or large-sized module structure which is an assembly of battery modules in which a plurality of secondary batteries are connected in series/parallel. In such a battery module, a large number of battery cells are connected to each other in series or in parallel to form a battery cell stack, thereby improving capacity and output. In addition, a plurality of battery modules may be mounted together with various control and protection systems such as BMS (battery management system) and a cooling system to form a battery pack.

In particular, a plurality of battery modules are mounted inside the battery pack, and battery modules adjacent to each other may be electrically connected to each other through the busbar. At this time, the outer surface of the busbar has a structure protected by a heat insulating material and an insulating material, which can prevent an electrical short phenomenon due to electrical contact with other metal structures (components).

However, when an abnormality such as overcurrent, overheating, or thermal runaway occurs inside the battery pack, a high temperature environment of 1000 degrees Celsius or higher is formed, which causes a problem that the heat insulating material and the insulating materials formed on the outer surface of the busbar are disappeared and the outer surface of the busbar is exposed to the outside.

When the outer surface of the busbar is exposed to the outside in this way, the possibility of occurrence of an electrical short phenomenon is high since the outer surface of the busbar exposed to the outside is in contact with other metal structures (components) inside the battery pack 1000, and when an electrical short phenomenon occurs, there is a problem that an electrical closed circuit is formed inside the battery pack, which accelerates the thermal runaway phenomenon inside the battery pack.

Therefore, there is a growing need to develop a busbar assembly that prevents the outer surface of a busbar from being directly exposed to a high-temperature environment even when a high-temperature environment is formed inside a battery pack, and thus can effectively prevent the above-mentioned electrical short phenomenon and a heat propagation or thermal runaway phenomenon caused thereby between adjacent battery modules, and a battery pack including the same.

### [DETAILED DESCRIPTION OF THE INVENTION]

### [Technical Problem]

Therefore, it is an object of the present disclosure to provide a busbar assembly that includes a first insulating part that surrounds a main body of the busbar and a second insulating part that surrounds both ends of the busbar, and thus can prevent an electrical short circuit phenomenon and a heat transfer phenomenon caused thereby between a surrounding metal structure and the busbar under a high temperature environment due to the occurrence of an internal flame, and a battery pack including the same.

The technical objects to be solved by the embodiments of the present disclosure are not limited to those disclosed above, and other objects which are not mentioned herein should be clearly understood by those skilled in the art from the following description and the accompanying drawing.

### [Technical Solution]

According to certain aspects of the present disclosure, there is provided a busbar assembly comprising: a busbar; a first insulating part that surrounds a main body of the busbar; and a second insulating part that surrounds both ends of the busbar, wherein the second insulating part comprises: a pair of cap parts that surround the upper and side surfaces of both ends of the busbar, and a connecting part located between the pair of cap parts and integrated with the pair of cap parts, and wherein the connecting part extends along a longitudinal direction of the busbar and is located on an outer surface of the main body of the busbar.

The busbar assembly may further comprise a cover part that surrounds the outer surface of the first insulating part in a state where the connecting part is located on an outer surface of the main body of the busbar.

The cover part may be made of a glass fiber material.

The first insulating part may be formed with a recessed part that is recessed from the outer surface of the first insulating part toward the main body of the busbar, and the connecting part may be inserted into the recessed part.

The recessed part may be formed to a thickness smaller than the thickness of the first insulating part.

The connecting part may be inserted into the first insulating part.

The connecting part may be spaced apart from the main body of the busbar.

The width of the connecting part may be smaller than the width of the first insulating part.

The connecting part further comprises a first reinforcing part and a second reinforcing part that are made of the same material as the connecting part while being integrated therewith, the first reinforcing part may be formed at a position where one of the pair of cap parts and the connecting part are in contact with each other, and the second reinforcing part may be formed at a position where the other of the pair of cap parts and the connecting part are in contact with each other.

The first reinforcing part and the second reinforcing part may have a width larger than the connecting part, or have a thickness larger than the connecting part, or have a width and a thickness larger than the connecting part.

The connecting part further comprises at least one third reinforcing part that is made of the same material as the connecting part and integrated with the connecting part, and the at least one third reinforcing part may be formed between both ends of the connecting part.

The at least one third reinforcing part may have a width larger than the connecting part, or have a thickness larger than the connecting part, or have a width and a thickness larger than the connecting part.

The first insulating part and the second insulating part may be made of a fire-resistant silicone, respectively.

According to certain other aspects of the present disclosure, there is provided a battery pack comprising the above-mentioned at least one busbar assembly, wherein the battery pack comprises a pack frame that houses a plurality of battery modules, wherein the busbar assembly electrically connects a pair of adjacent battery modules among the plurality of battery modules, and both ends of the busbar are electrically connected to each of the pair of adjacent battery modules.

The battery pack may further comprise a fixing part that fixes both ends of the busbar to each of the pair of adjacent battery modules, while passing through both ends of the busbar.

### [Advantageous Effects]

According to certain embodiments, the busbar assembly of the present disclosure and the battery pack including the same can prevent an electrical short phenomenon and a heat propagation phenomenon caused thereby between a surrounding metal structure and a busbar under a high temperature environment due to the occurrence of an internal flame.

In addition, in the busbar assembly of the present disclosure and the battery pack including the same, the foamed silicone part can delay the heat propagation or thermal runaway time between adjacent battery modules.

The effects of the present disclosure are not limited to the effects mentioned above, and additional other effects not mentioned above will be clearly understood from the present specification and the appended drawings by those skilled in the art.

### [BRIEF DESCRIPTION OF THE DRAWINGS]

FIG. 1 is a diagram showing one side of a busbar assembly according to certain embodiments of the present disclosure.
FIG. 2 is a diagram showing one surface of a busbar assembly in a state where a cover part is removed from the busbar assembly of FIG. 1.
FIG. 3 is a diagram showing one surface of a busbar assembly in a state where a second insulating part is removed in the busbar assembly of FIG. 2.
FIG. 4 is a diagram showing a cross section taken along the a-a' axis of FIG. 1.
FIG. 5 is a diagram showing a cross section taken along the b-b' axis of FIG. 1.
FIG. 6 is a diagram showing one surface of a busbar assembly in a state where a cover part is removed in the busbar assembly according to certain other embodiments.
FIG. 7 is a diagram showing one surface of a busbar assembly in a state where a second insulating part is removed in the busbar assembly of FIG. 6.
FIG. 8 is a diagram showing a cross section taken along the same axis as FIG. 4.
FIG. 9 is a diagram showing a cross section cut along the same axis as FIG. 5.
FIG. 10 is a diagram showing one surface of a second insulating part included in a busbar assembly according to certain other embodiments of the present disclosure.
FIG. 11 is a cross-sectional view showing the busbar assembly of FIG. 1 arranged between adjacent battery modules in a battery pack according to certain other embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, a busbar assembly 100 according to certain embodiments of the present disclosure will be described.

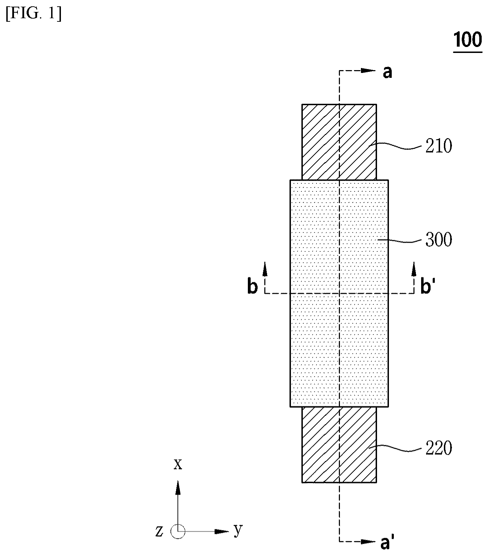

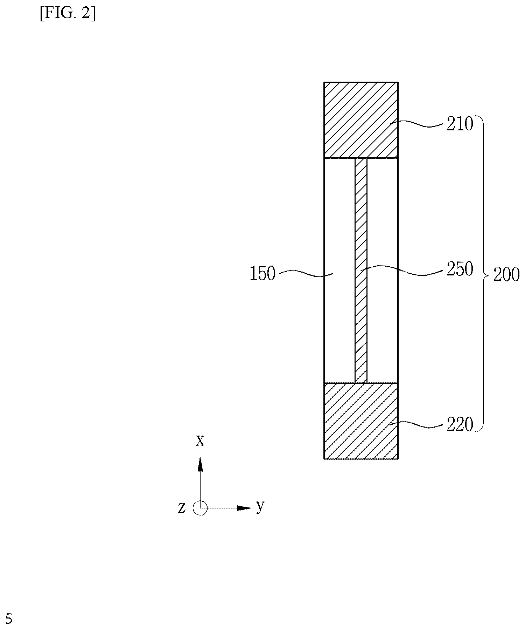

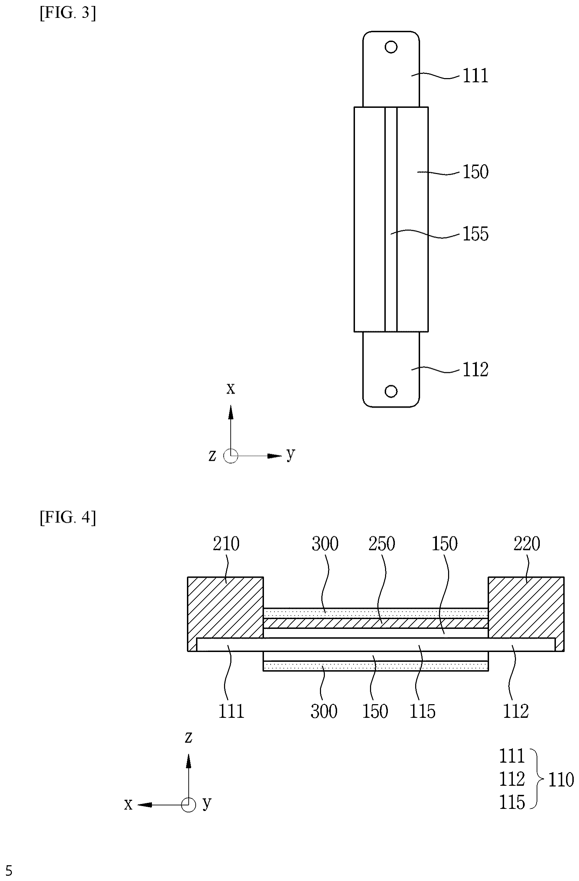

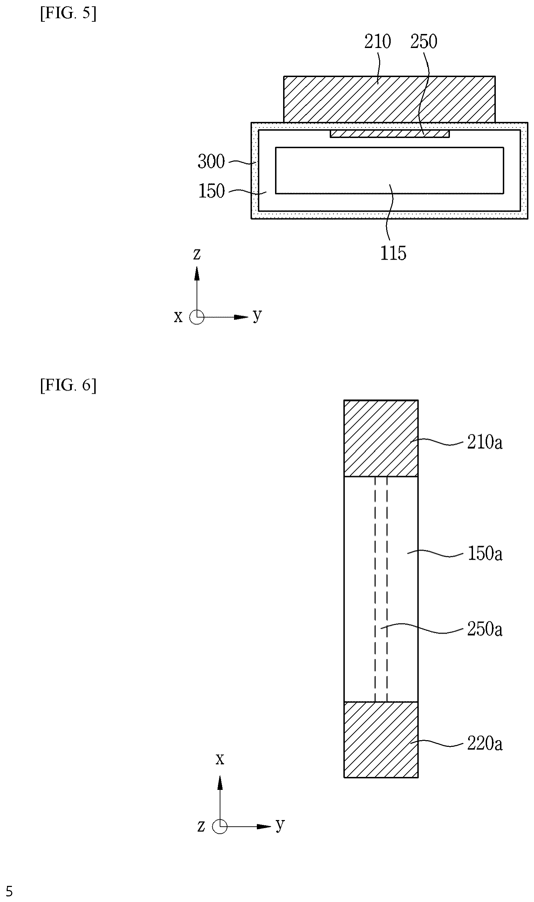

FIG. 1 is a diagram showing one side of a busbar assembly according to certain embodiments of the present disclosure. FIG. 2 is a diagram showing one surface of a busbar assembly in a state where a cover part is removed from the busbar assembly of FIG. 1. FIG. 3 is a diagram showing one surface of a busbar assembly in a state where a second insulating part is removed in the busbar assembly of FIG. 2. FIG. 4 is a diagram showing a cross section taken along the a-a' axis of FIG. 1. FIG. 5 is a diagram showing a cross section taken along the b-b' axis of FIG. 1.

Referring to FIGS. 1 and 4, a busbar assembly 100 according to certain embodiments of the present disclosure comprises a busbar 110; a first insulating part 150 that surrounds a main body 115 of the busbar 110; and a second insulating part 200 that surrounds both ends 111 and 112 of the busbar, respectively.

Referring to FIGS. 3 and 4, in the busbar assembly 100, the busbar 110 may include two ends 111 and 112 and a main body 115. More specifically, the both ends 111 and 112 of the busbar 110 may include a first end 111 and a second end 112. In addition, the both ends 111 and 112 of the busbar and the main body 115 may be integrated with each other.

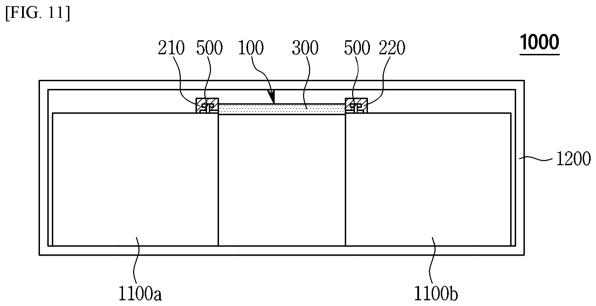

The two ends 111 and 112 of the busbar 110 may be electrically connected to internal components such as electrical components or battery modules housed inside the battery pack 1000 (FIG. 11). As an example, the busbar 110 may be a flexible busbar, and may have a shape in which a part is bent along an empty space inside the battery pack 1000 (FIG. 5).

More specifically, the lower surface of both ends 111 and 112 of the busbar 110 may be exposed to the outside. In other words, the lower surface of both ends 111 and 112 of the busbar 110 may not be surrounded by the first insulating part 150 and the second insulating part 200. Here, the lower surface of both ends 111 and 112 of the busbar 110 may be in contact with internal components such as electrical components or battery modules housed inside the battery pack 1000 (FIG. 11), and may be electrically connected to the components.

As an example, the busbar 110 may be a metal plate such as copper (Cu). However, the material of the busbar 110 is not limited thereto, and any metal plate having electrical conductivity may be applied to the present embodiments.

Thereby, in the busbar assembly 100 according to the present embodiments, the busbar 110 can electrically connect the battery modules to each other within a complicated and narrow space between adjacent battery modules.

Referring to FIGS. 2 to 5, the first insulating part 150 may surround the outer surface of the busbar 110. More specifically, the first insulating part 150 may surround the outer surface of the main body 115 of the busbar 110. In other words, the first insulating part 150 may surround the outer surface of the remaining portion of the busbar 110 excluding the both ends 111 and 112.

Therefore, in the busbar assembly 100 according to the present embodiments, the first insulating part 150 surrounds the outer surface of the main body 115 of the busbar 110, and thus can form an insulating structure for the main body 115 of the busbar 110 from the external environment, and can prevent an electrical short phenomenon between the main body 115 of the busbar 110 and other metal structures and/or electrical components.

The first insulating part 150 may be made of a material having a heat-resistance under a high-temperature environment. As an example, the first insulating part 150 may be made of a fire-resistant silicone, a fire-resistant plastic, or a mixture of fire-resistant silicone and fire-resistant plastic.

Here, the fire-resistant silicone material means a material that is easy to prepare as an injection-molded material, and maintains insulation properties while being converted into ceramic when exposed to a high-temperature environment such as a flame. As an example, the fire-resistant silicon can be converted into ceramic at a temperature of 500 degrees Celsius or higher and 1700 degrees Celsius or lower, but the temperature range at which the fire-resistant silicon is converted into ceramic is not limited thereto.

As an example, the fire-resistant silicon may include a silicon polymer and a silica. For example, the applied silicon polymer may be a polysiloxane-based compound having a vinyl group as a functional group and can serve as a base material for the fire-resistant silicon material. For example, the applied silica may be a reinforcing filler included in the silicon polymer and may be a fumed silica. A high-purity silicon chloride (SiCl₄) compound can be prepared by a process of reacting metal silicon as a main raw material with hydrochloric acid and purifying it, which can be reacted with hydrogen and oxygen in a high-temperature flame to obtain a fumed silica. In addition, the fire-resistant silicon may include platinum (Pt) as a catalyst.

When the fire-resistant silicon is exposed to flame or high temperature, the silicon polymer decomposes and silica (SiO₂) is crosslinked to form a ceramic material. The first insulating part 150 of certain embodiments including the fire-resistant silicon may be converted into ceramic rather than burning or melting away even when exposed to flames or placed in a high-temperature environment, thereby maintaining electrical insulation properties.

Further, the fire-resistant plastic material may mean a material having excellent flame resistance. In particular, the fire-resistant plastic material may perform the function of blocking flames without generating holes or drips for a certain period of time when exposed to flames. Specifically, the fire-resistant plastic may form a carbonized layer in the flame, thereby protecting internal structures. As an example, the fire-resistant plastic may include at least one of a PPO (Polyphenylene Oxide)-based material, a PA (Polyamide)-based material, and a PBT (Polybutylene Terephthalate)-based material.

Here, the high temperature environment may be an environment in which the temperature inside the battery pack 1000 is rising due to phenomena such as overcurrent, overheating, and thermal runaway of a plurality of battery modules 1100a and 1100b mounted together inside the battery pack 1000. As an example, the high temperature environment may be an environment in which a fire occurs in a battery cell located inside the battery pack 1000 through a cell event such as a thermal runaway phenomenon, and the battery pack 1000 is heated to a temperature enough to disappear some of its internal components. In other words, the high temperature environment may mean an ultra-high temperature environment where the temperature rises rapidly to more than 1200 degrees Celsius.

Therefore, when the first insulating part 150 is made of a fire-resistant silicone material, it is not disappeared in a high-temperature environment such as a flame, but is converted into ceramic, so that an electrical short phenomenon between the main body 115 of the busbar 110 and other metal structures and/or electrical components can be prevented even in a high-temperature environment. In addition, when the first insulating part 150 is made of a fire-resistant plastic material, the insulation and fire resistance are improved, so that the busbar can be protected from flames generated from the outside.

Referring to FIGS. 1, 2 and 4, the second insulating part 200 may include a pair of cap parts 210 and 220 that surround the upper surface and side surfaces of the both ends 111 and 112 of the busbar 110, respectively, and a connecting part 250 that is located between the pair of cap parts 210 and 220 and is integrated with the pair of cap parts 210 and 220.

The second insulating part 200 may be made of a material having a heat-resistance in a high-temperature environment. As an example, the second insulating part 200 may be made of a fire-resistant silicone material. Here, the fire-resistant silicone material may be described similarly to the fire-resistant silicone material of the first insulating part 150 described above. In particular, the fire-resistant silicone material included in the second insulating part 200 has relatively high elasticity compared to the fire-resistant plastic material included in the first insulating part 150, so that the pair of cap parts 210 and 220 can be folded relatively easily, and the connecting part 250 can be easily fixed to the first insulating part 150.

Thereby, the second insulating part 200 is converted into ceramic without being disappeared in a high-temperature environment such as a flame, so that an electrical short phenomenon between the two ends 111 and 112 of the busbar 110 and other metal structures and/or electrical components can be prevented even in a high-temperature environment.

A pair of cap parts 210 and 220 may include a first cap part 210 and a second cap part 220. The first cap part 210 and the second cap part 220 may each have a structure that surrounds the both ends 111 and 112 of the busbar 110 and the fixing part 500 (FIG. 11) that passes through both ends 111 and 112 of the busbar 110. In addition, the inside of the first cap part 210 and the second cap part 220 may be recessed in a direction opposite to the direction toward both ends 111 and 112 of the busbar 110, and the fixing part 500 (FIG. 11) may be located together with both ends 111 and 112 of the busbar 110 in the space recessed in each of the first cap part 210 and the second cap part 220.

The pair of cap parts 210 and 220 may have a width that can cover both ends 111 and 112 of the busbar 110. As an example, the pair of cap parts 210 and 220 may have the same width as the first insulating part 150 as shown in FIGS. 1 and 2. As another example, the pair of cap parts 210 and 220 may have a width larger than the first insulating part 150 unlike those shown in FIGS. 1 and 2. As another example, the pair of cap parts 210 and 220 may have a width larger than that of both ends 111, 112 of the busbar 110 while having a width smaller than the first insulating part 150, unlike those shown in FIGS. 1 and 2.

Thereby, in the busbar assembly 100 according to the present embodiments, the pair of cap parts 210 and 220 surround the fixed part 500 (FIG. 11) together with both ends 111 and 112 of the busbar 110, thereby forming an insulating structure for the both ends 111 and 112 of the busbar 110 from the external environment. In addition, it is possible to improve the insulation properties of the electrical connection structure between both ends 111 and 112 of the busbar 110 and the internal components such as electric components or battery modules housed inside the battery pack 1000 (FIG. 11).

The pair of cap parts 210 and 220 may have a structure that allows them to be freely attached to/detached from both ends 111 and 112 of the busbar 110. As an example, the pair of cap parts 210 and 220 may be detached from/attached to the both ends 111 and 112 of the busbar 110 as they are lifted up in a direction away from or lowered in a direction closer to the upper surfaces of the both ends 111 and 112 of the busbar 110.

Therefore, in the busbar assembly 100 according to the present embodiments, a pair of cap parts 210 and 220 included in the second insulating part 200 can be freely attached to/detached from both ends 111 and 112 of the busbar 110, so that the busbar assembly 100 can be easily connected to internal components such as electrical components or battery modules housed inside the battery pack 1000 (FIG. 11).

The connecting part 250 may be integrated with the pair of cap parts 210 and 220. In other words, one end of the connecting part 250 may be integrated with the first cap part 210, and the other end of the connecting part 250 may be integrated with the second cap part 220. As an example, the connecting part 250 and the pair of cap parts 210 and 220 may be integrally formed by injection molding.

The connecting part 250 may extend along the longitudinal direction of the busbar 110 between the pair of cap parts 210 and 220. As an example, the connecting part 250 may be located on the upper surface of the main body 115 of the busbar 110 as shown in FIGS. 2, 3 and 5, and may extend along the longitudinal direction of the busbar 110 based on the center of the main body 115. However, the position of the connecting part 250 is not limited thereto and may be adjusted to an appropriate position depending on the case.

The connecting part 250 may have a width enough to stably fix between the pair of cap parts 210 and 220. As an example, the connecting part 250 may have a width smaller than the first insulating part 150, as shown in FIGS. 2, 3 and 5. As another example, the connecting part 250 may have the same width as the first insulating part 150, unlike those shown in FIGS. 2, 3 and 5.

Therefore, in the busbar assembly 100 according to the present embodiments, the pair of cap parts 210 and 220 and the connecting part 250 are integrated with each other, and thus it is not necessary to include a separate fixing means such as tape, so the preparation process is simplified, and the fixing force between the pair of cap parts 210 and 220 and the connecting part 250 can be further strengthened.

Referring to FIGS. 1, 4 and 5, the busbar assembly 100 according to certain embodiments of the present disclosure may further include a cover part 300 that surrounds the outer surface of the first insulating part 150 in a state where the connecting part 250 is located on the outer surface of the main body 115 of the busbar 110. More specifically, the cover part 300 may surround the entire outer surface of the first insulating part 150.

The cover part 300 may be made of at least one material from the group consisting of a fire-resistant silicone, a glass fiber, and a mica (MICA). As an example, the cover part 300 may be made of a material such as a tape onto which a fire-resistant silicone is applied or coated, or may be made of a material such as a tape containing mica (MICA). As another example, the cover part 300 may have a structure in which a plurality of sheets made of at least two materials from the group consisting of a fire-resistant plastic, a glass fiber, and a mica (MICA) are laminated. However, the material of the cover part 300 is not limited thereto, and any material having fire resistance and structural rigidity may be included in the present embodiments.

Therefore, in the busbar assembly 100 according to the present embodiments, the cover part 300 surrounds the outer surface of the first insulation part 150, and thus can primarily form an insulating structure for the main body 115 of the busbar 110 against the external environment while improving structural rigidity. That is, the cover part 300 prevents the busbar 110, the first insulating part 150 and the second insulating part 200 located inside the cover part 300 from being directly exposed to flames, thereby further improving fire resistance.

In addition, the cover part 300 can protect the busbar 110, the first insulating part 150 and the second insulating part 200 located inside the cover part 300 from physical external force, thereby preventing damage due to mechanical friction.

Referring to FIGS. 2 to 5, the first insulating part 150 is formed with a recessed part 155 that is recessed from the outer surface of the first insulating part 150 toward the main body 115 of the busbar 110, and the connecting part 250 may be inserted into the recessed part 155.

The recessed part 155 may extend along the longitudinal direction of the busbar 110. In other words, the recessed part 155 may extend along the longitudinal direction of the connecting part 250 included in the second insulating part 200. As an example, the recessed part 155 may extend along the longitudinal direction of the busbar 110 based on the center of the busbar 110 as shown in FIGS. 2 to 5. However, the position of the recessed part 155 is not limited thereto, and may be adjusted to an appropriate position according to the position of the connecting part 250.

The recessed part 155 may be formed to a thickness smaller than the thickness of the first insulating part 150. The recessed part 155 may also be formed to a thickness equal to or larger than the thickness of the connecting part 250.

Thereby, in the busbar assembly 100 according to the present embodiments, the outer surface of the first insulating part 150 may be surrounded through the cover part 300 in a state where the connecting part 250 is inserted into the recessed part 155, so that the second insulating part 200 may be stably fixed inside the cover part 300.

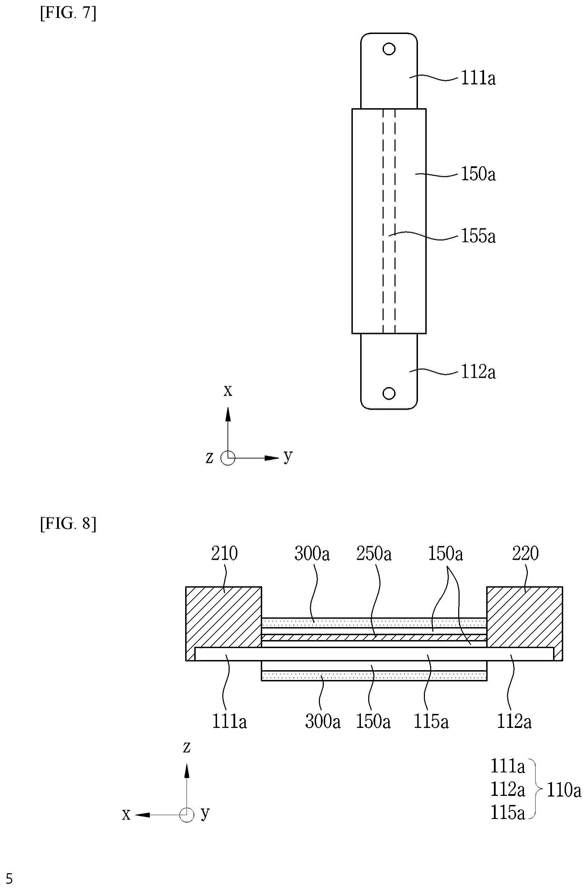

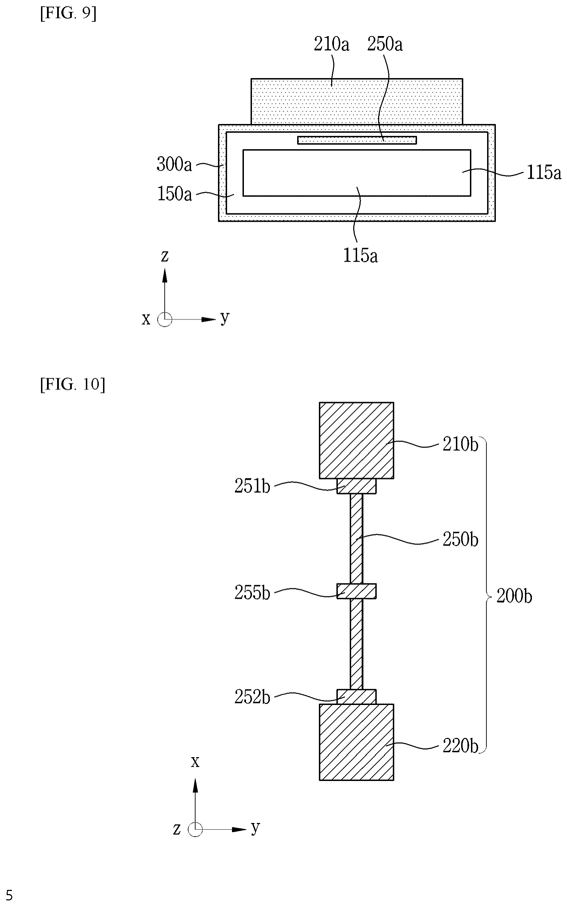

FIG. 6 is a diagram showing one surface of a busbar assembly in a state where a cover part is removed in the busbar assembly according to certain other embodiments. FIG. 7 is a diagram showing one surface of a busbar assembly in a state where a second insulating part is removed in the busbar assembly of FIG. 6. FIG. 8 is a diagram showing a cross section taken along the same axis as FIG. 4. FIG. 9 is a diagram showing a cross section cut along the same axis as FIG. 5.

Referring to FIGS. 6 to 9, the busbar assembly 100 according to the present embodiments differ only in the location of the connecting part 250a, unlike the busbar assembly 100 shown in FIGS. 1 to 5, and the other components can be described similarly, and the position of the connecting part 250a will be mainly described below.

Referring to FIGS. 6 to 9, the connecting part 250a may be inserted into the first insulating part 150a. More specifically, the connecting part 250a may be inserted into the first insulating part 150a located on the upper surface of the main body 115a of the busbar. In other words, an insertion hole 155a is formed inside the first insulating part 150a located on the upper surface of the main body 115a of the busbar, and a connection part 250a may be inserted into the insertion hole 155a. Here, the connecting part 250a may be spaced apart from the main body 115 of the busbar 110.

The insertion hole 155a may extend along the longitudinal direction of the busbar 110a. In other words, the insertion hole 155a may extend along the longitudinal direction of the connection part 250a included in the second insulating part 200a. As an example, the insertion hole 155a may extend along the longitudinal direction of the busbar 110a based on the center of the busbar 110a as shown in FIGS. 6 and 7. However, the position of the insertion hole 155a is not limited thereto, and may be adjusted to an appropriate position according to the position of the connection part 250a.

The insertion hole 155a may be formed to a thickness smaller than the thickness of the first insulating part 150a. The insertion hole 155a may also be formed to a thickness equal to or larger than the thickness of the connecting part 250a. In addition, the insertion hole 155a may be formed to a thickness equal to or smaller than the thickness of the connection part 250a.

Thereby, in the busbar assembly 100 according to the present embodiments, the outer surface of the first insulation part 150 can be surrounded through the cover part 300 in a state where the connecting part 250a is inserted into the insertion hole 155a formed inside the first insulating part 150a, so that the second insulating part 200 can be more stably fixed inside the cover part 300.

FIG. 10 is a diagram showing one surface of a second insulating part included in a busbar assembly according to certain other embodiments of the present disclosure.

Referring to FIG. 10, the busbar assembly 100 according to the present embodiments differs only in the shape of the second insulating part 200b, unlike the busbar assembly 100 shown in FIGS. 1 to 9, and the other components can be described similarly, and the second insulating part 200b will be mainly described below.

In the second insulating part 200b, the connecting part 250b may further include a first reinforcing part 251b and a second reinforcing part 252b that are made of the same material as the connecting part 250b while being integrated therewith.

More specifically, the first reinforcing part 251b may be formed at a position where one of the pair of cap parts 210b and 220b and the connecting part 250b are in contact with each other, and the second reinforcing part 252b may be formed at a position where the other of the pair of cap parts 210b and 220b and the connecting part 250b are in contact with each other.

The first reinforcing part 251b and the second reinforcing part 252b may have a width larger than the connecting part 250b, or have a thickness larger than the connecting part 250b, or have a width and thickness larger than the connecting part 250b.

Therefore, in the busbar assembly 100 according to the present embodiments, the first reinforcing part 251b and the second reinforcing part 252b can more firmly reinforce the connection between the pair of cap parts 210b and 220b of the second insulating part 200b and the connecting part 250b. In addition, since the pair of cap parts 210b and 220b can be freely attached to/detached from the both ends 111 and 112 of the busbar 110, there is an advantage in that the space between the pair of cap parts 210b and 220b and the connecting part 250b can be frequently folded, and damage caused thereby can be supplemented by the first reinforcing part 251b and the second reinforcing part 252b.

The connecting part 250b further includes at least one third reinforcing part 255b that is made of the same material as the connecting part 250b while being integrated therewith, and the third reinforcing part 255b may be formed between the both ends of the connecting part 250b. As an example, as shown in FIG. 10, one third reinforcing part 255b may be formed at the center of the connecting part 250b. As another example, unlike those shown in FIG. 10, the number of third reinforcing parts 255b may be at least two or more, and the third reinforcing part 255b may be located between the center of the connecting part 250b and one end of the connecting part 250b.

The third reinforcing part 255b may have a width larger than the connecting part 250b, or have a thickness larger than the connecting part 250b, or have a width and thickness larger than the connecting part 250b.

Therefore, in the busbar assembly 100 according to the present embodiments, since the first reinforcing part 251b, the second reinforcing part 252b and the third reinforcing part 255b are arranged along the longitudinal direction of the connecting part 250b, there is an advantage in that the shape of the connecting part 250b can be fixed in the longitudinal direction of the connecting part 250b, and the connecting part 250b can be prevented from being bent in the width direction.

FIG. 11 is a cross-sectional view showing the busbar assembly of FIG. 1 arranged between adjacent battery modules in a battery pack according to certain other embodiments of the present disclosure.

Referring to FIG. 11, a battery pack 1000 according to certain other embodiments of the present disclosure is a battery pack 1000 including at least one busbar assembly 100, and includes a pack frame 1200 that houses a plurality of battery modules 1100a and 1100b.

Here, the pack frame 1200 may include a lower pack frame (not shown) on which a plurality of battery modules 1100a and 1100b are mounted, and an upper pack frame (not shown) located on the upper part of the battery modules 1100a and 1100b. More specifically, the upper pack frame may cover the upper part of the lower pack frame while the plurality of battery modules 1100a and 1100b are mounted on the lower pack frame. Here, the lower pack frame and the upper pack frame may be coupled with each other by a method such as welding or bonding, thereby sealing the inside of the battery pack 1000.

The battery modules 1100a and 1100b include a battery cell stack (not shown) in which a plurality of battery cells are stacked, and a module frame (not shown) that houses the battery cell stack (not shown).

The battery cell is preferably a pouch-type battery cell. As an example, the battery cell may be prepared by housing an electrode assembly in a pouch case of a laminate sheet including a resin layer and an inner layer, and then heat-sealing the sealing part of the pouch case. The battery cell may be formed in a rectangular sheet-shaped structure. The above battery cell may be formed in a plurality of numbers, and the plurality of battery cells may be stacked so as to be electrically connected to each other, thereby forming a battery cell stack (not shown). Here, the number of battery cells constituting the battery cell stack (not shown) may be adjusted depending on the case.

The module frame (not shown) may include an upper cover and a U-shaped frame. Here, the U-shaped frame may include a bottom part and two side surface parts extending upward from both ends of the bottom part. At this time, the bottom part may cover the lower surface of the battery cell stack (not shown), and the side surface parts may cover the side surfaces of the battery cell stack (not shown). The upper cover may be coupled to the U-shaped frame by welding or the like in a state where the corresponding corner portions are in contact with each other, thereby forming a structure that covers the upper, lower, left, and right surfaces of the battery cell stack (not shown). For this purpose, the upper cover and the U-shaped frame may be made of a metal material having a predetermined strength.

However, the structure of the module frame (not shown) is not limited thereto, and as another example, the module frame (not shown) may have a mono-frame structure. Here, the mono-frame may be in the form of a metal plate in which the upper surface, lower surface, and both side surfaces are integrated. The mono frame can be manufactured by extrusion molding. Furthermore, the structure of the module frame (not shown) may be provided as an L-shaped frame structure in addition to the mono frame or U-shaped frame, and may be provided as various structures not described in the above-described examples. In addition, the battery modules 1100a and 1100b according to certain other embodiments of the present disclosure may have a structure in which the module frame is omitted. That is, the battery pack 1000 according to the present embodiments has a structure in which the module frame is omitted among the components of the battery modules 1100a and 1100b, and thus can further increase the space utilization efficiency inside the battery pack 1000 while reducing the weight of the battery pack 1000.

In addition, the battery modules 1100a and 1100b further includes a busbar frame located on the front and rear surfaces of the battery cell stack (not shown), respectively, and an end plate covering the busbar frame. Here, a busbar (not shown) electrically connected to a battery cell stack (not shown) may be located on the busbar frame. Thereby, the end plate may physically protect the battery cell stack (not shown) and other electrical components from external impact.

Referring to FIG. 11, the busbar assembly 100 may electrically connect a pair of adjacent battery modules 1100a and 1100b among a plurality of battery modules 1100a and 1100b. More specifically, the busbar assembly 100 may be located on the upper part of a pair of adjacent battery modules 1100a and 1100b, and the busbar assembly 100 may extend along a space between the pair of adjacent battery modules 1100a and 1100b.

In the busbar assembly 100, the lower surface of both ends of the busbar 110 is exposed toward the battery modules 1100a and 1100b, and both ends of the busbar 110 may be electrically connected to the pair of adjacent battery modules 1100a and 1100b, respectively.

The battery pack 1000 according to the present embodiments may further include a fixing part 500 that fixes both ends 111 and 115 of the busbar 110 to the pair of adjacent battery modules 1100a and 1100b, while passing through both ends of the busbar 110 located inside a pair of cap parts 210 and 220.

As an example, the fixing part 500 may be a component such as a bolt. Without being limited thereto, however, any component that can stably fix the both ends 111 and 115 of the busbar 110 and a pair of battery modules 1100a and 1100b to each other while maintaining an electrical connection between them may be included in the present embodiments.

Thereby, in the battery pack 1000 according to certain other embodiments of the present disclosure, the above-mentioned busbar assembly 100 electrically connects a pair of adjacent battery modules 1100a and 1100b to each other, which prevents the busbar 110 from being exposed to the outside through the first insulating part 150, the second insulating part 200, and/or the cover part 300 in a high-temperature environment inside the battery pack 1000. In addition, it is possible to prevent flame exposure to the outside of the battery pack 1000 and acceleration of the heat propagation speed due to an electrical short phenomenon between the bus bar 110 and other metal structures and/or electrical components.

The above-mentioned battery pack can be applied to various devices, which include, for example, transportation vehicles such as electric bicycles, electric vehicles, and hybrids. However, without being limited thereto, the present disclosure can be applied to various devices that can use the battery module and the battery pack including the same may be applied to various devices using secondary batteries, which also falls within the scope of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

- 100:: busbar assembly
- 110, 110a:: busbar
- 111, 111a:: first end
- 112, 112a:: second end
- 115, 115a:: main body
- 150, 150a:: first insulating part
- 200, 200a, 200b:: second insulating part
- 210, 210a, 210b:: first cap part
- 220, 220a, 220b:: second cap part
- 250, 250a, 250b:: connecting part
- 251b:: first reinforcing part
- 252b:: second reinforcing part
- 55b:: third reinforcing part
- 300, 300a:: cover part
- 500:: fixing part
- 1000:: battery pack
- 1100a:: first battery module
- 1100b:: second battery module
- 1200:: pack frame

## Claims

1. A busbar assembly comprising:
a busbar;
a first insulating part that surrounds a main body of the busbar; and
a second insulating part that surrounds both ends of the busbar,
wherein the second insulating part comprises:
a pair of cap parts that surround the upper and side surfaces of both ends of the busbar, and a connecting part located between the pair of cap parts and integrated with the pair of cap parts, and
wherein the connecting part extends along a longitudinal direction of the busbar and is located on an outer surface of the main body of the busbar.

2. The busbar assembly of claim 1,
further comprising a cover part that surrounds the outer surface of the first insulating part in a state where the connecting part is located on the outer surface of the main body of the busbar.

3. The busbar assembly of claim 2,
wherein the cover part is made of a glass fiber material.

4. The busbar assembly of claim 1,
wherein the first insulating part is formed with a recessed part that is recessed from the outer surface of the first insulating part toward the main body of the busbar, and
the connecting part is inserted into the recessed part.

5. The busbar assembly of claim 4,
wherein the recessed part is formed to a thickness smaller than the thickness of the first insulating part.

6. The busbar assembly of claim 1,
wherein the connecting part is inserted into the first insulating part.

7. The busbar assembly of claim 6,
wherein the connecting part is spaced apart from the main body of the busbar.

8. The busbar assembly of claim 1,
wherein the width of the connecting part is smaller than the width of the first insulating part.

9. The busbar assembly of claim 1,
wherein the connecting part further comprises a first reinforcing part and a second reinforcing part that are made of the same material as the connecting part while being integrated therewith,
the first reinforcing part is formed at a position where one of the pair of cap parts and the connecting part are in contact with each other, and
the second reinforcing part is formed at a position where the other of the pair of cap parts and the connecting part are in contact with each other.

10. The busbar assembly of claim 9,
wherein the first reinforcing part and the second reinforcing part have a width larger than the connecting part, or have a thickness larger than the connecting part, or have a width and a thickness larger than the connecting part.

11. The busbar assembly of claim 1,
wherein the connecting part further comprises at least one third reinforcing part that is made of the same material as the connecting part and integrated with the connecting part, and
the at least one third reinforcing part is formed between both ends of the connecting part.

12. The busbar assembly of claim 11,
wherein the third reinforcing part has a width larger than the connecting part, or has a thickness larger than the connecting part, or has a width and a thickness larger than the connecting part.

13. The busbar assembly of claim 1,
wherein the first insulating part is made of a fire-resistant silicone, a fire-resistant plastic, or a mixture of fire-resistant silicone and fire-resistant plastic, and
the second insulating part is made of a fire-resistant silicone.

14. A battery pack comprising at least one busbar assembly of claim 1,
wherein the battery pack comprises a pack frame that houses a plurality of battery modules,
wherein the busbar assembly electrically connects a pair of adjacent battery modules among the plurality of battery modules, and
both ends of the busbar are electrically connected to each of the pair of adjacent battery modules.

15. The battery pack of claim 14,
further comprising a fixing part that fixes both ends of the busbar to each of the pair of adjacent battery modules, while passing through both ends of the busbar.
